## Europäisches Patentamt
## European Patent Office
## Office européen des brevets

(19)

(11) Veröffentlichungsnummer: **0 008 810**
B1

(12) # EUROPÄISCHE PATENTSCHRIFT

(45) Veröffentlichungstag der Patentschrift:
26.08.81

(51) Int. Cl.³: **C 02 F 3/08, C 02 F 3/10**

(21) Anmeldenummer: **79103430.9**

(22) Anmeldetag: **13.09.79**

(54) Verfahren und Vorrichtung zur biologischen Abwasserreinigung nach dem Schlammbelebungsverfahren.

(30) Priorität: **13.09.78 DE 2839872**

(43) Veröffentlichungstag der Anmeldung:
**19.03.80 Patentblatt 80/6**

(45) Bekanntmachung des Hinweises auf die Patenterteilung:
**26.08.81 Patentblatt 81/34**

(84) Benannte Vertragsstaaten:
**AT BE CH FR GB IT NL**

(56) Entgegenhaltungen:
**DE-A-1 459 485**
**DE-A-1 584 911**
**DE-A-2 017 799**
**DE-B-1 184 286**
**FR-A-1 579 195**
**FR-A-2 354 292**
**GB-A-508 881**
**GB-A-1 281 874**

(73) Patentinhaber: **Funk, Michael, Bühler Strasse 20,
D-6604 Saarbrücken-Güdingen (DE)**

(72) Erfinder: **Funk, Michael, grad. Ing., Bühler Strasse 20,
D-6604 Güdingen (DE)**
Erfinder: **Funk, Leo, grad. Chem., In den Dellen,
D-6682 Ottweiler (DE)**

(74) Vertreter: **Wuesthoff, Franz, Dr.-Ing. et al, Patentanwälte
Wuesthoff -v. Pechmann-Behrens-Goetz
Schweigerstrasse 2, D-8000 München 90 (DE)**

ACTORUM AG

Verfahren und Vorrichtung zur biologischen Abwasserreinigung nach dem Schlammbelebungsverfahren

**Beschreibung**

Die Erfindung betrifft ein Verfahren zur biologischen Vollreinigung nach dem Schlammbelebungsverfahren, bei dem das im Grobrechen, Feinrechen und ggf. Sandfang vorgereinigte Abwasser mit Luft, insbesondere Druckluft, oder technischem Sauerstoff u. mit Belebtschlamm (Biomasse, biologischer Rasen) in Berührung und Wechselwirkung zur Reinigung einschliesslich Oxydation, Nitrifikation und ggf. Denitrifikation gebracht werden, wobei die Biomasse an Haftkörpern in Form von offenporigen flexiblen Schwamm- oder Schaumstoffkörpern ausgebildet ist, die abwechselnd zusammengedrückt und wieder entspannt werden.

Die Erfindung betrifft des weiteren eine Vorrichtung zur Durchführung eines derartigen Verfahrens.

Es ist ein generelles Ziel aller vollbiologischen Abwasserreinigungsverfahren, dass der Flora und Fauna (Biomasse, biologischer Rasen) des Abwassers der lebensnotwendige und zum aeroben Abbau der organischen Inhaltsstoffe erforderliche Luftsauerstoff zur vollen Ausnutzung in ausreichendem Masse schnell und wirksam mit relativ geringem Energieaufwand angeboten wird. Bei den konventionellen Belebtschlammanlagen wird der Luftsauerstoff durch Einblasen von Luft mittels Gebläse über der Beckensole oder mit horizontal bzw. vertikal rotierenden Oberflächenlüftern zugeführt, sofern man das vorgereinigte Abwasser nicht über Tropfkörper abtropfen lässt oder in einem mit kugelförmigen Hohlkörpern als Haftkörpern für biologischen Rasen (Biomasse) gefüllten gelochten Drehrohr, das hälftig in ein Klärwasserbecken eintaucht und langsam gedreht wird, mit Sauerstoff intensiv in Berührung bringt, um den aeroben Abbau zu beschleunigen (DE-A-23 03 657).

Es ist bekannt (DE-A-15 84 927), die Belüftung des Gemischs des Abwassers mit dem Klärschlamm bzw. der Biomasse mit einem Druck durchzuführen, der in einzelnen oder allen Stufen über dem Atmosphärendruck, vorzugsweise im Bereich von 2 bis 5 kg/cm², liegt. Der bei den bekannten Verfahren anfallende Klärschlamm wird durch Druckentlastung abgetrennt. Der Abbau der Inhaltsstoffe lässt sich durch die Belüftung bei erhöhtem Druck beschleunigen.

Sind sehr grosse Luftsauerstoffmengen in das Klärschlamm-Wassergemisch einzubringen, steigt der Energieaufwand sowohl bei der Oberflächenbelüftung als auch bei der Druckbelüftung auf der Behältersole stark an und erreicht eine natürliche Grenze dort, wo es durch die mit dem Sauerstoffeinbringen einhergehende erhöhte Turbulenz zur Zerschlagung der Schlammflocken oder zum Aufschäumen kommt. Es muss daher ein weitgehendes Gleichgewicht zwischen Sauerstoffeintrag und Sauerstoffzehrung im Belüftungsbehälter erzielt werden. Die aeroben Kleinlebewesen (Bakterien und Protozoen) im Belüftungsbehälter sind aber nur lebensfähig in der Lage, den gewünschten Abbau der Schmutzstoffe durchzuführen, wenn in ihrer Umgebung genügend Sauerstoff für sie bereitsteht, d.h. nach derzeitigen Erfahrungen mit einem Mindestgehalt von 1 bis 2 mg/l im Wasser gelöst direkt zur Verfügung steht.

Um einen hohen Sauerstoffeintrag mit vergleichsweise niedrigem Energieaufwand zu erreichen, ohne dass die Anlagekosten steigen und die Gefahr grosser Turbulenzen und damit das Zerschlagen des Belebtschlamms auftreten, sieht ein älteres bekanntes Verfahren (DE-B-24 20 977) vor, dass im Belüftungsbehälter Haftkörper für die Biomasse und Kolloidfänger in Form von offenporigen, flexiblen Schaumstoffkörpern und eine Zusammendrückvorrichtung vorgesehen sind, mit der die Schaumstoffkörper durch wechselweise Volumenvergrösserung und Volumenverkleinerung mit eingeleiteter Luft oberhalb der Wasseroberfläche gefüllt und unter dieser befreibar sind. Durch die Schaumstoffkörper wird der Sauerstoffeintrag intermittierend unterstützt, doch ist die auf diese Weise erzielbare Raumausbeute begrenzt. Es ist nicht auszuschliessen, dass die eingetragene Luft schneller als für einen ausreichenden Übergang des Sauerstoffs nötig zum frei-schwebenden Belebtschlamm hochperlt, was zu einer Energievergeudung führt.

Mit verhältnismässig niedrigem Energieaufwand, aber ebenfalls mit niedriger Raum-Zeit-Ausbeute erfolgt die Abwasserreinigung beim Tropfkörperverfahren und zwar auch dann, wenn als Tropfkörper ein starrer offenporiger Schaumstoffkörper, der den Raum des Belüftungsbehälters bzw. Bioreaktors praktisch vollständig ausfüllt und von dem Abwasser-Druckluft-Gemisch durchströmt wird, vorgesehen ist (DE-A-20 02 926). Ausserdem lässt sich nicht vermeiden, dass sich abgestorbene Biomasse in den Poren anreichert, den Druckabfall erhöht und die Leistungsfähigkeit mindert. Die Anpassungsmöglichkeit an veränderliche Abwasserverhältnisse ist begrenzt. Bei Hintereinanderschaltung von drei Stufen, einer Oxydations-, einer Nitrifikations- und einer Denitrifikationsstufe, besteht nur eine begrenzte Möglichkeit zur Denitrifikation, weil die Reinigungsverhältnisse der beiden ersten Stufen wenig variabel sind.

Zur Verbesserung der Raumausbeute bei hohem Sauerstoffeintrag mit vergleichsweise niedrigem und gleichbleibendem Energieaufwand ist ein Verfahren bekannt, bei welchem die Ablagerung von abgestorbener Biomasse in den Poren von Haftkörpern nicht zu befürchten ist und die mehrstufig durchgeführte Vollreinigung in vergleichsweise kurzer Verweilzeit abgeschlossen ist, (DE-B-25 50 818), bei dem das vorgeklärte Abwasser zusammen mit eingetragener Druckluft in drei Stufen jeweils durch Haftkörper für die Biomasse und Kolloidfänger in Form von offenporigen Schwamm- oder Schaumstoffkörpern in der ersten Stufe, Oxydationsstufe, und anschliessend der zweiten Stufe, der Nitrifikationsstufe, unter Überdruck aerob sowie schliesslich in einer dritten Stufe, der Denitrifikationsstufe, anaerob gereinigt und der ggf. entstehende Überschuss-Schlamm in einer Flotationsnachklärstufe unter Druckentlastung abgeschieden wird und in den einzelnen Stufen die flexiblen Schaumstoffkörper intermittierend durch eine Zusammendrückvorrichtung zusammengedrückt und wieder entspannt werden und die Druckluft intermittierend in der ersten und ggf. zweiten Stufe dem den Schaumstoffkörpern zuströmenden Abwasser zugegeben wird. Die Zusammendrückvorrichtung weist eine zwischen zwei Endstellungen hin- und hergehende Siebkolbenplatte auf, zu deren beiden Seiten jeweils Schaumstoffkörper angeordnet sind, die bei einer Mittelstellung der Siebkolbenplatte etwa entspannt sind. Das Abwasser-Luftgemisch wird in Form einer Kapillarströmung durch die Haftkörper hindurchgeleitet. Auch dieses Verfahren erfolgt mehrstufig und hat daher einen entsprechenden apparativen Aufwand zur Voraussetzung. Die Haftkörper werden auch bis zu 50% ihres Ausgangsvolumens durch die beweglichen Siebplatten zusammengedrückt.

Der Erfindung liegt die Aufgabe zugrunde, ein Verfahren und eine Vorrichtung zur biologischen Vollreinigung von Abwasser nach dem Schlammbelebungsverfahren anzugeben, bei welchem der Energieaufwand und der apparative Aufwand erniedrigt sind und die Vollreinigung in verlgeichsweise kurzer Verweilzeit abgeschlossen ist.

Diese Aufgabe ist für das eingangs genannte Verfahren durch die kennzeichnenden Merkmale des Verfahrens-Hauptanspruchs gelöst. Ausgestaltungen dieses Verfahrens ergeben sich aus den Verfahrens-Unteransprüchen sowie der nachfolgenden Beschreibung. Zwei zur Durchführung des Verfahrens geeignete Vorrichtungen sind in zwei nebengeordneten Vorrichtungsansprüchen gekennzeichnet, während vorteilhafte Ausgestaltungen sich aus den Unteransprüchen und der nachfolgenden Beschreibung ergeben.

Die stückigen Schaumstoffkörper wirken als Haftkörper für die Biomasse und als Kolloidfänger in bekannter Weise. In den Poren der Schaumstoffe siedeln sich die Mikroben so zahlreich an, dass nach kurzer Einarbeitungszeit ein hochaktiver «biologischer Schlamm» bzw. Biomasse gebildet ist.

Das erfindungsgemässe Verfahren erlaubt eine vollbiologische Totalaufbereitung organisch verschmutzter Abwässer mit Schlammstabilisierung, wobei neben den gelösten Schmutzstoffen auch die absetzbaren und nichtabsetzbaren Schwebstoffe des Abwassers in einer einzigen Verfahrensstufe abgeschieden, angereichert und unter Sauerstoffeinwirkung mit der Biomasse stabilisiert (mineralisiert) werden. Die Schüttung aus den einzelnen stückigen Schaumstoffkörpern wirkt als Schlammkollektor, der alle gelösten und nichtgelösten Schmutz- und Schwebstoffe des Abwassers aufnimmt. Dieser Schlammkollektor kann auch als Drehtauchkörper bezeichnet werden. Die Schüttung wird bei langsamer Drehung mit einer mittleren Umfangsgeschwindigkeit von 0,05 bis 1 (2) m/min wechselweise durch das Abwasser und durch sauerstoffreiche Luft, insbesondere Druckluft, oder auch technischem Sauerstoff zur Erhöhung der Raum-Zeit-Ausbeute bewegt. Als Schlammkollektor oder Drehtauchkörper verwendet man entweder geschlossenmantelige Drehrohre, die bis zu ihrer etwa halben Füllhöhe langsam vom Abwasser durchströmt werden, wobei sie über der Wasseroberfläche mit technischem Sauerstoff oder komprimierter Luft geladen werden, oder Sieb-Drehrohre (Siebwalzen), die mit den stückigen Schaumstoffkörpern gefüllt sind und die bis zur Hälfte in trogförmige Abwasserbecken eingetaucht und durch das Rohrabwasser gedreht werden. Die bis zur Hälfte aus dem Becken herausragenden Sieb-Drehrohre werden in diesem Fall mit einer Glocke über dem Beckenrand nach aussen hin hermetisch abgeschlossen, so dass unter die Glocke technischer Sauerstoff oder Druckluft eingeleitet werden kann.

Bei Langzeitversuchen hat sich gezeigt, dass bei langsamer Bewegung der stückigen Schaumstoffkörper durch unbehandelte kommunale Rohabwässer in Abhängigkeit von der Drehzahl, Füllmenge, Füllhöhe sowie Grösse, Dichte und Form der Schaumstoffkörper nach relativ kurzen Reaktionszeiten (ca. 30 Minuten) 45 bis 80, unter Umständen auch bis 95% der absetzbaren und nichtabsetzbaren Schwebstoffe aus dem Abwasser durch die Schaumstoffkörper schon in einem Bioreaktor niedergeschlagen und in den zahlreichen Poren feinverteilt angereichert werden können.

Wenn dafür gesorgt wird, dass in den Poren der Schaumstoffkörper immer wieder genügend Sauerstoff aus dem Wasser oder aus dem überstehenden Luftraum eindringen kann, bilden sich sehr rasch hochaktive Populationen aerober Bakterienstämme heran, die sich im engsten Kontakt mit den niedergeschlagenen Schmutzstoffen feinverteilt über die hochporöse Unterlage bis in die Poren der Schaumstoffkörper ausbreiten und dort den Abbau der organischen Schmutzstoffe des Abwassers herbeiführen. Bei der langsamen Drehbewegung der flexiblen stückigen Haftkörper durch das Abwasser werden die Schmutzstoffe mit dem sauerstoffangereicherten Wasser durch die kapillaren Saugkräfte der Schwamm- oder Schaumstoffe in die Poren aufgesaugt, wonach beim Auftauchen über der Wasseroberfläche beim Drehen durch den Luftraum das Wasser aus den Poren teilweise wieder aus- bzw. zurückläuft und hierbei sauerstoffreiche Luft bzw. technischer Sauerstoff in die Poren nachdringen kann. Aufgrund des relativ niedrigen spezifischen Gewichtes der Haftkörper befinden sich diese unter Wasser annähernd im Schwebezustand. Beim Auftauchen aus dem Wasser wirkt das Eigengewicht der flüssigkeitserfüllten Haftkörper, wobei sie sich, da sie flexibel sind, zusammenpressen und hierbei das aufgesaugte Wasser teilweise wieder beschleunigt aus den Poren abgeben. Die aufgenommenen Schwebestoffe und die herangebildete Biomasse bleiben jedoch grösstenteils in den Poren haften. Beim Wiedereintauchen in das Wasser erfahren die mit Luft bzw. Sauerstoff gefüllten Haftkörper einen Auftrieb. Die Auftriebskraft drückt die Haftkörper gegen die übrige Schüttung und die Begrenzungswände, wobei jetzt die Luft teilweise aus den Poren feinverteilt ausströmt. Beim Drehvorgang verändert sich die Lage der Haftkörper ständig ein wenig und somit auch die Grösse der auf die Haftkörper einwirkenden Auftriebskräfte. Bei der weiteren Bewegung der Haftkörper durch das Wasser wird im Austausch mit Luft wieder Wasser aufgenommen. Jeder einzelne Schaumstoff-Haftkörper verändert also bei der langsamen Drehung des Drehrohrs ständig seine Lage im Raum, was zu einer Umwälzung bzw. einem Mischen führt, wobei das auf seiner Oberfläche einwirkende Gewicht der gesamten Schüttung einem ständigen Wechsel unterliegt und zu einem mässigen Walken führt. Werden die Haftkörper langsam durch das Abwasser bewegt, so wirkt auf sie auch eine hydraulische Kraft, das Wasser strömt durch die Zwischenräume der einzelnen Haftkörper und durchspült diese Zwischenräume. Eine intensive Durchmischung der Abwässer ist hierbei gewährleistet, ohne dass grosse Turbulenzen entstehen. Das Zusammendrücken und Wiederentspannen der einzelnen Haftkörper erfolgt also sehr mässig. Diese werden nicht durchströmt. Die Drehzahl des Drehrohrs, die Füllmenge und Füllhöhe, sowie Grösse, Dichte und Form der Schaumstoff-Haftkörper sind hierbei bestimmende Faktoren. Die Vorzugsbereiche sind in den Unteransprüchen herausgestellt. Je höher die Schütthöhe im Drehrohr, desto grösser sollte die Dichte bzw. Härte der verwendeten Schwämme oder Schaumstoffe sein, damit nicht durch das Gewicht der Schüttung die einzelnen Haftkörper zu stark zusammengedrückt werden.

Da bei der Verwendung von technischem Sauerstoff oder Erhöhung des Druckes im überstehenden Luftraum die Sauerstoffsättigungswerte im Wasser wesentlich erhöht werden, ist eine ausreichende Versorgung der Biomasse bis in die feinsten Poren, in denen sie sich noch ansiedelt, gewährleistet, so dass das angereicherte organische Schlamm-Material bei grossen Aufenthaltszeiten bis zu einem Jahr und länger mit vergleichbar geringem Luft- bzw. Sauerstoffaufwand durchgreifend belebt und stabilisiert, bzw. mineralisiert wird. Dieser Vorgang ist, wie nachstehend noch beschrieben, einstellbar. In den hermetisch abgeschlossenen Belüftungsbehältern kann dann sparsam dosierter Sauerstoff zur vollen Ausnutzung gelangen.

Die Antriebsenergie des Drehrohrs ist aufgrund der sehr geringen Drehzahl gering, insbesondere bei am äusseren Umfang verwendeter Antriebskraft. Besondere Einsparungen im Platzbedarf und bei den baulichen Investitionen gegenüber konventionellen Kläranlagen sind dadurch möglich, dass erfindungsgemäss ausser eines Grob- und Feinrechens zur Abscheidung der gröbsten Feststoffpartikel des Abwassers und ggf. eines Sandfanges sonst keinerlei Einrichtungen für die Schlammabscheidung und Schlammaufbereitung erforderlich sind. Es werden nämlich alle Schmutzstoffanteile des Abwassers gleichzeitig in einer Oxydationsstufe angereichert und der Biomasse zum Abbau angeboten. Da in den Abend- und Nachtstunden bei einem kommunalen Kläranlagenbetrieb der Gehalt an Schmutzstoffen im Abwasser weitgehend abnimmt, bleibt den Abwasserbakterien genügend Zeit, das tägliche Überangebot an solchen Nahrungsstoffen auszugleichen. Gleichzeitig können aber auch die enthaltenen Stickstoffverbindungen durch Nitrifikation und Denitrifikation eliminiert werden. Es bedarf dazu keiner gesonderten weiteren Stufe.

Es hat sich gezeigt, dass gegenüber konventionellen Belebtschlammflocken oder biologischen Rasenbelägen auf Tropfkörpern die Nahrungsverteilung auf der weit grösseren aktiven Oberfläche der Schaumstoffkörper für die angesiedelten Mikroben wesentlich gleichmässiger und der Sauerstoffzutritt optimal verläuft, so dass weit höhere Abbauraten erzielt werden, wenn die Volumenänderung der Schaumstoffkörper nur wenige Prozent beträgt. Die Schmutzstoffpartikel werden nach dem erfindungsgemässen Verfahren nie grobflockig und dickschichtig nur an der Oberfläche der Haftkörper abgelagert, sondern dringen bei deren langsamer Bewegung durch das Abwasser gleichmässig verteilt bis in die tieferliegenden Poren ein. Zu Verstopfungen der Poren kommt es hierbei überraschenderweise, wie nachgewiesen werden konnte, nicht, da die auf die Haftkörper wirkenden, wenn auch geringen dynamischen Kräfte, den Transport feiner Partikel ins Innere der Schaumstoffkörper durch die Poren unterstützt. Alle gröberen Teile der Abwasser-Schwebestoffe werden bei der langsamen Drehung der Haftkörper an der rauhen Oberfläche des Schaumstoffes im Gegensatz zu allen anderen bekannten Verfahren regelrecht zermahlen und in feinere Partikel überführt, die leicht mit dem Wasser in die tieferliegenden Poren eindringen können. Diese werden also nicht wechselweise durch intensiveres Komprimieren und Expandieren der Schwämme mit dem Wasser wieder aus den Poren ausgestossen und zurückgesaugt, wie es bei den bekannten Verfahren gemäss den Auslegeschriften 24 20 977 und 25 50 818 der Fall ist, sondern schlagen sich im Innern der Haftkörper auch im Gegensatz zu den bekannten anderen Verfahren mit Scheibentauchtropfkörpern gleichmässig verteilt nieder.

Anhand mikroskopischer Kontrastaufnahmen liess sich überraschend verdeutlichen, dass das Anwachsen der niedergeschlagenen Schwebestoffe und der angesiedelten Bakterienkolonien im Schaumstoffgerüst von aussen nach innen zum Zentrum des Haftkörpers unter den vorgesehenen Betriebsbedingungen sehr gleichmässig erfolgt, wobei auch nachgewiesen werden konnte, dass die meiste biologisch aktive Masse in den äusseren Schaumstoffschichten zu finden ist und dass weiter nach innen fortschreitend mineralisierte bzw. stabilisierte Schlammanteile anzutreffen sind. Diese überraschende Beobachtung mag sich dadurch erklären, dass die mineralisierten Schlammteile spezifisch schwerer sind und in das Zentrum der Schaumstoffkörper wandern müssen, weil die Körper erfindungsgemäss ständig langsam gedreht werden, die adsorptiven Kräfte zwischen den mineralisierten Schlammteilchen und dem Schaumstoff-Haftkörper mit fortschreitender Mineralisierung bzw. Stabilisierung abnehmen, so dass die kapillaren Saugkräfte diese Teilchen weiter in das Zentrum der Schaumstoffkörper befördern, und weil eine Rückwanderung zu den Aussenzonen hin durch die biologisch aktive, schleimige Masse in den Aussenzonen bei den ganz geringen Strömungsgeschwindigkeiten nicht stattfinden kann.

Das anhaftende Schlamm-Material der äusseren Schichten der Haftkörper ist von mehr oder weniger schleimiger Konsistenz, während das innere Sediment aus einer feinteiligen, wasserärmeren Substanz mit wesentlich geringeren organischen Anteilen besteht. Die höchste biologische Aktivität entfaltet sich also an der Peripherie der stückigen Haftkörper, wo auch das Populationswachstum der Bakterienstämme stattfindet, da den äusseren Schichten die grössere Sauerstoffmenge angeboten wird.

Weiter innen sind Bakterien mit höherem Lebensalter anzutreffen, die im Begriffe sind, sich selbst zu mineralisieren. Die Schlammzuwachsrate der Biomasse bleibt begrenzt, da sich die endogene Phase (Stabilisierungsphase) der älteren Bakterienkolonien im Innern der Schaumkörper mit der Wachstumsphase der hochaktiven jüngeren Populationen in den äusseren Schichten die Waage hält.

Im Gegensatz zu den bekannten Verfahren nach den Auslegeschriften 24 20 977 und 25 50 818 wird durch die neue Verfahrensweise erreicht, dass der Luftsauerstoff (oder technische Sauerstoff) also in erster Linie nur die äusseren Schichten der Schaumstoffkörper erreicht und zum Zentrum hin der Kontakt mit dem Luftsauerstoff stark abnimmt. Auch der im Wasser gelöste Sauerstoffanteil wird zum Zentrum der Haftkörper hin stark reduziert. Dies wird dadurch erreicht, dass die auf die flexiblen Schaumstoffkörper wirkenden Kompressions- und Expansionskräfte in ihrer Grösse unterschiedlich durch Wahl der Drehzahl, der Schütthöhe, der Porengrösse, der Grösse und Form (würfelförmig, kubisch oder kugelförmig, jeweils mit oder ohne abgeschrägten Kanten), eingestellt wird, so dass der Wasseraustausch im Innern der Schaumstoffkörper beschleunigt oder verlangsamt ist und die Kontaktzeit des Abwassers mit den Bakterien vom Zentrum zur Randzone hin vergrössert oder verringert werden kann, um die gewünschte Reinigung des Abwassers zu erzielen. Im Innern der Haftkörper kann die Aufenthaltszeit des Abwassers beispielsweise wesentlich grösser als in den Aussenzonen der Haftkörper gehalten werden. Entsprechend der Austauschgeschwindigkeit des Abwassers im Innern der flexiblen Haftkörper kann das Sauerstoffangebot für die Bakterienstämme vermehrt oder stark verringert werden, so dass spezifische Bakterien ihren Sauerstoffbedarf aus sauerstoffhaltigen Stickstoffverbindungen entnehmen müssen. Hierzu kann auch die Drehzahl der Drehrohre und/oder der Sauerstoffpartialdruck der sauerstoffhaltigen Atmosphäre verändert werden.

In engster Lebensgemeinschaft mit den aeroben Bakterien sind fakultative Stämme anzutreffen, die in der Lage sind, ihren Sauerstoffbedarf ausschliesslich über die im Abwasser gelösten sauerstoffhaltigen Stickstoffverbindungen wie Nitrate und Nitrite zu decken. Es konnte nachgewiesen werden, dass die erfindungsgemässe Verfahrensweise so zur vollbiologischen Totalaufbereitung organisch verschmutzter Abwässer die Möglichkeit schafft, in einem Belüftungsbehälter bzw. Bioreaktor gleichzeitig neben den gelösten und ungelösten Schmutzstoffen auch die enthaltenen Stickstoff-Verbindungen durch Nitrifikation und Denitrifikation zu eliminieren.

Alle diese Reinigungsvorgänge wie Ausflokkung der gelösten und kolloidal gelösten organischen Schmutzstoffe, Niederschlagen der Schwebstoffe, Abbau der Fette und Kohlehydrate und Desaminierung der Eiweissstoffe sowie Nitrifizierung der Ammoniumverbindungen als auch Denitrifizierung der Nitrite und Nitrate vollziehen sich in dem neuen Milieu, das die langsam gedrehten stückigen Haftkörper bilden, nebeneinander, wobei Reaktionszeiten von 30 bis 60 Minuten vielfach ausreichend sind, um schon in einem einzigen Belüftungsbehälter über 80% der molekular- und kolloidal gelösten und ungelösten schwebenden und absinkenden Schmutzstoffe sowie mindestens 60% der gelösten Stickstoffverbindungen eines normalen kommunalen Abwassers zu entfernen. Keines der bisher bekannt gewordenen Schaumstoff-Haftkörper verwendenden Verfahren ist in der Lage, alle diese Reinigungsvorgänge in einem einzigen Reaktionsraum in vergleichbarer Weise und in kurzer Zeit durchzuführen.

Auch eine Phosphateliminierung kann erreicht werden, wenn dem Rohabwasser vor Eintritt in den Bioreaktor Aluminium- oder Eisensalze zudosiert werden, die dann die gelösten Orthophosphate in unlösliche Verbindungen überführen, weil die mit den übrigen Schwebstoffen zur Ausfällung gelangen. Durch Hintereinanderschalten mehrerer Belüftungsbehälter bzw. Schlammkollektoren kann der gesamte Kläreffekt bis auf mindestens 95% gesteigert werden.

1 m³ Reinigungsraum kann mit 40 Einwohnergleichwerten beaufschlagt werden, das bedeutet 2,4 kg $BSB_5/m^3 \cdot$ Tag können bei einer Aufenthaltszeit von maximal 60 Min. und einem Stromverbrauch von 24 Watt$\cdot$h/Einwohner$\cdot$Tag mit dem genannten Reinigungseffekt von über 80% in einem Bioreaktor abgebaut werden.

Aufgrund der hohen Raumbelastung können Anlagen mit einem geringen Flächenbedarf von ca. 0,13 m²/Einwohner erstellt werden.

Schlammabsetzbecken und Schlammfaulräume, wie sie bei den meisten bekannten Verfahren erforderlich sind, bedarf es beim erfindungsgemässen Verfahren nicht. Die Stabilisierung der abgeschiedenen Schlämme erfolgt in den Drehrohren vollständig. Die nach längerer Betriebsdauer von z.B. einem Jahr stark angewachsenen stabilisierten Schlammassen werden aus dem System dadurch entfernt, dass die älteren, nun ausreichend beladenen oder überladenen Schaumstoff-Haftkörper gegen neue Haftkörper, z.B. über eigens vorgesehene Einzelluken am Drehrohr, von Zeit zu Zeit ausgetauscht werden. Die nach längerem Einsatz entnommenen Haftkörper entwässern sehr rasch, da ihre Oberfläche porös und die Verdunstungsrate sehr hoch ist. Bereits 48 h nach der Entnahme liegt der Wassergehalt der in Haftkörpern angereicherten stabilisierten Schlämme unter 70%. Sie können leicht transportiert, aber auch geruchlos gelagert werden oder zerkleinert als hochwertige Düngemittel Verwendung finden.

Die hochporösen Schaumstoff-Haftkörper stellen ein grosses freies Volumen zur Aufnahme stabilisierter Schmutzstoffe zur Verfügung. Der Bioreaktor kann so ausgelegt werden, dass dieses etwa 20 l/Einwohner beträgt. Bei einem angenommenen Raumverlust in den Schaumstoff-Körpern von maximal 30% (Versuchsergebnisse zeigen, dass der Raumverlust in den Schaumstoff-Körpern im allgemeinen wesentlich geringer ist und nur 20% und weniger beträgt), würden zur Aufnahme der mineralisierten bzw. stabilisierten Schmutzstoffe ca. 16 l/Einwohner zur Verfügung stehen. Bei einem mittleren Volumen mineralisierter Feststoffe in den Schaumstoff-Körpern von $1,8 \times 10^{-2}$ l/Einwohner·Tag könnte ein Bioreaktor bis zur vollständigen Ausnutzung des zur Verfügung stehenden Raumangebots weit über ein Jahr betrieben werden.

Zwei Ausführungsbeispiele erfindungsgemässer Vorrichtungen zur biologischen Vollreinigung sind anhand einer Zeichnung näher erläutert, in der zeigt:

Fig. 1 einen Längsschnitt durch ein vollmanteliges, geschlossenes Drehrohr,

Fig. 2 einen Querschnitt durch das Drehrohr nach Fig. 1,

Fig. 3 eine perspektivische Schrägansicht eines Reinigungsbeckens mit drei trogförmigen Abteilungen und drei Sieb-Drehrohren und

Fig. 4 einen Teillängsschnitt durch das stirnseitige Ende des Beckens und des Sieb-Drehrohres.

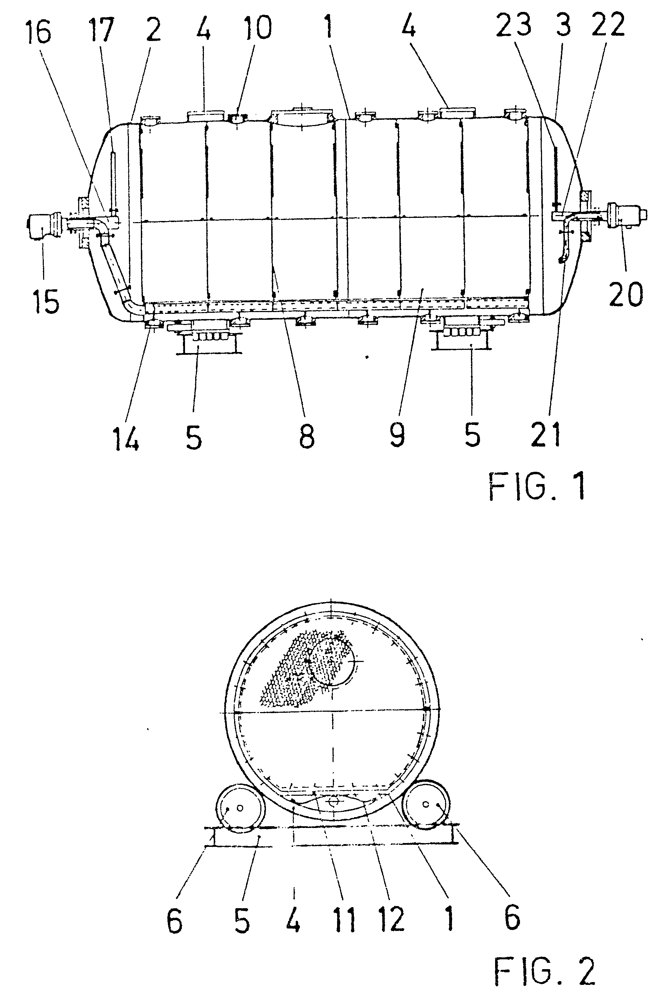

Das in den Fig. 1 und 2 dargestellte Drehrohr 1 ist ein zylindrischer Behälter, der stirnseitig einlasseitig mit einem angeschweissten Deckel 2 und stirnseitig auslasseitig mit einem angeschweissten Deckel 3 abgeschlossen ist. Am Umfang sind zwei Laufringe 4 vorgesehen, mit denen der Drehbehälter auf einem Drehgestell 5 abgestützt ist, das zu beiden Seiten der Längsachse jeweils ein Rollenpaar 6 hat, von denen wenigstens eine Rolle angetrieben ist. Auf diese Weise ist das Drehrohr in Drehung versetzbar.

Das Drehrohr ist innen durch achsnormale Sieb-Trennwände 8 in mehrere Kammern 9 unterteilt. Diese sind durch Luken 10 mit stückigen Schaumstoff-Körpern als Haftkörper für Biomasse weitgehend gefüllt.

Die Kammern sind an einer Stelle des Umfangs, in Fig. 2 unten, mittels einer achsparallelen, sich in Richtung einer Sehne des Querschnittes erstreckenden Sieb-Wand 11 abgeteilt. Unterhalb dieser Wand befindet sich in jeder Kammer 9 ein bogenförmiges Abdeckblech 12, das an der einen Seite an der Innenwand des Drehrohrs 1 befestigt ist und auf der anderen Seite in geringem Abstand, einstellbar gehalten ist, um einen Austrittsquerschnitt für das in das Drehrohr eingeleitete Abwasser zu bilden. Für die Einleitung dient ein Abwasserzuführungsrohr 14, das sich in den Raum unterhalb der Abdeckbleche 12 durch die vorderste (in Fig. 1) linke Trennwand 8 erstreckt. Es ist durch einen Drehkopf 15 axial durch den einlasseitigen Deckel 2 eingeleitet. An den Drehkopf 15 ist axial eine Abwasserzulaufleitung angeschlossen. Das Abwasserzuführrohr 14 verläuft zwischen der Mitte und dem Umfang des Drehrohrs etwa parallel zur Wandung des stirneinlasseitigen Deckels 2. Koaxial um das axiale Abwasserzuführungsrohr verläuft ein weiteres grösseres Rohr 16 durch den Drehkopf 15 für die Einleitung von Druckluft, die aus einem an das innere Ende des Rohrs 16 vertikal angeschlossenen perforierten Luftverteilrohr 17 ausströmt. Ein Druckluft-Zuführrohr ist seitlich an den Drehkopf 15 angeschlossen.

Ein weiterer Drehkopf 20 ist am auslasseitigen Ende im Abschlussdeckel 3 des Drehrohrs 1 vorgesehen, um das geklärte Abwasser dort mittels eines inneren Rohrs 21 abzuziehen. Zentral an den Drehkopf 20 ist eine nicht dargestellte Klarwasserabzugsleitung angeschlossen. Zum Abzug verbrauchter Luft und anderer Gase ist durch den Drehkopf 20 ein weiteres, das Rohr 21 koaxial umgebendes Rohr 22 vorgesehen, an welches jedenfalls vertikal ein perforiertes Rohr 23 zur Ableitung angeschlossen ist. Zur Ableitung verbrauchter Luft ist wiederum seitlich mit dem Drehkopf 20 ein ebenfalls nicht dargestelltes Ableitrohr verbunden.

Während des Reinigungsbetriebs läuft das Drehrohr 1 mit sehr geringer Umfangsgeschwindigkeit langsam um, so dass die sich in den Kammern 9 befindenden Haftkörper langsam umgewälzt und dabei in den oberen Bereich über die Wasseroberfläche angehoben werden, so dass sie während des Hochhebens bis zum Kulminationspunkt Abwasser abgeben und sich mit sauerstoffhaltiger Luft füllen können. Durch das Auf und Ab werden die Haftkörper leicht komprimiert und expandiert, so dass ein langsamer Wasseraustausch in den Poren stattfindet.

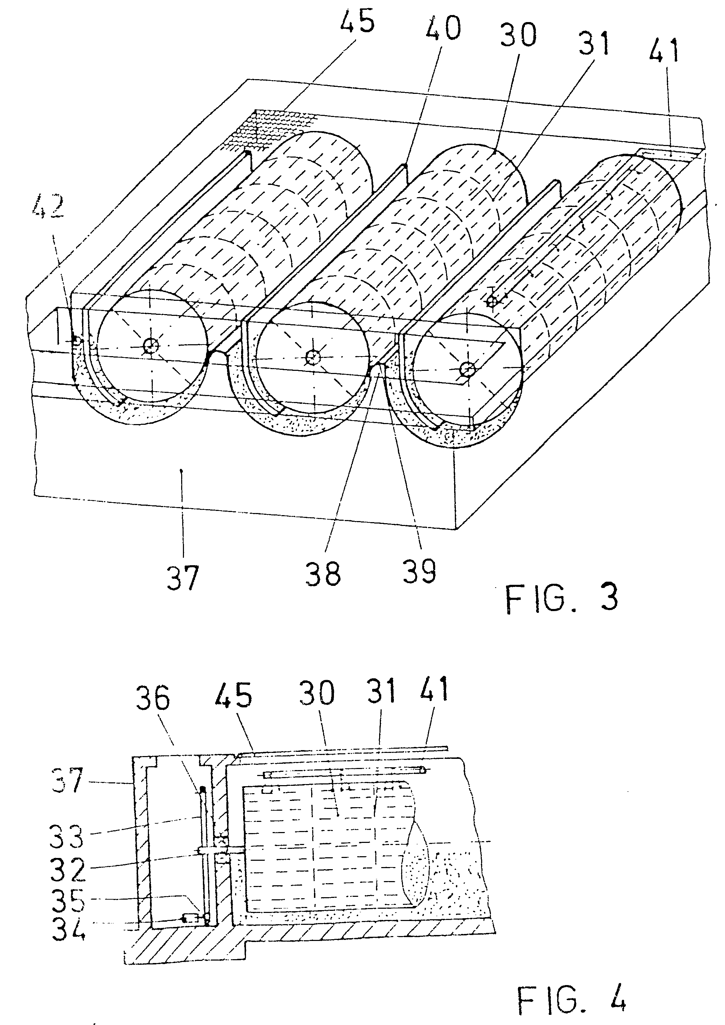

Bei der in den Fig. 3 und 4 dargestellten zweiten Ausführungsform sind die Haftkörper jeweils in einem Sieb-Drehrohr 30 untergebracht, das ebenfalls mittels Trennwänden 31 in mehrere Kammern unterteilt ist. Diese Kammern sind wiederum mit Schaumstoff-Körpern gefüllt. Die Sieb-Drehrohre bilden eine sogen. Tauchwalze, die an ihren Enden in Lagern 36 mit Zapfen 32 läuft, auf denen ein Zahnrad 33 befestigt ist, welches über einen Antriebsmotor 34 und ein Ritzel 35 in langsame Drehung vesetzt wird. In dem dargestellten Becken 37 sind parallel zueinander drei Sieb-Drehrohre 30 angeordnet. Das Becken hat jeweils Trogform bezüglich jedes Sieb-Drehrohrs. Die gebildeten Tröge sind jeweils durch eine Längswand 39 mit einer Überlaufkante 38 voneinander getrennt. Ausserdem ist zwischen der den unteren Teil der Sieb-Drehrohre 30 mit gleichem Abstand umgebenden Trogwand und dem Drehrohr jeweils ein einerseits bis nahe zur tiefsten Stelle des Trogs und andererseis bis über die Überlaufkante 38 reichende Tauchwand 40 vorgesehen, um eine unmittelbare Durchströmung der Tröge von einem zum anderen zu vermeiden.

Zur Aufgabe des zu reinigenden Abwassers dient eine parallel zum Sieb-Drehrohr 30 über dieses geführte Zulaufrinne 41, welche mit einer Reihe von Auslassöffnungen versehen ist, um das zu reinigende Wasser auf das Drehrohr zu verteilen. Das Abwasser hat eine ausreichende Verweilzeit in jedem Trog, um geklärt aus dem Becken über eine in der Fig. 3 links des linken Drehrohrs vorgesehene Ablaufrinne 42 abgezogen zu werden. Die Drehachsen der Drehrohre befinden sich etwa in Höhe der Überlaufkanten 38.

Das Becken ist ferner mit einer Abdeckung 45 versehen, die im vorliegenden Fall ebenfalls als Sieb ausgestaltet ist, so dass die normale Luftatmosphäre überall Zutritt zu den in den Sieb-Drehrohren 30 umgewälzten Haftkörpern aus Schaumstoff hat. Anstelle einer Abdeckung 45 kann auch eine Druckglocke vorgesehen sein, so dass über den Sieb-Drehrohren eine Druckatmosphäre aus Druckluft oder technischem Sauerstoff aufrechterhalten werden kann. In diesem Fall ist eine besondere Zuleitung vorzusehen.

Das Becken mit den trogförmigen Abteilungen gemäss Fig. 3 kann als Betonbecken ausgeführt sein.

**Ansprüche**

1. Verfahren zur biologischen Vollreinigung nach dem Schlammbelebungsverfahren, bei dem das im Grobrechen, Feinrechen und ggf. Sandfang vorgereinigte Abwasser und Luft, insbesondere Druckluft, oder technischer Sauerstoff mit Belebtschlamm (Biomasse) in Berührung und Wechselwirkung zur Reinigung einschliesslich Oxydation, Nitrifikation und ggf. Denitrifikation gebracht werden, der an Haftkörpern in Form von offenporigen flexiblen Schwammoder Schaumstoffkörpern ausgebildet ist, die abwechselnd zusammengedrückt und wieder entspannt werden, dadurch gekennzeichnet, dass das Abwasser einstufig über eine lose Schüttung stückiger, 10–100 cm³ grosser Haftkörper mit einem Raumgewicht von 15–30 kg/m³ und einer Porengrösse von 0,3–3 mm bzw. einer spezifischen Porenoberfläche von 0,5–6 m²/l bis zur Nitrifikation und ggf. Denitrifikation geleitet wird, die in einem mit einer Umfangsgeschwindigkeit von 0,05–2 m/min. umlaufenden Drehbehälter umgewälzt und dabei bis über die Wasseroberfläche in die Luft- oder Sauerstoffatmosphäre gehoben wird.

2. Verfahren nach Anspruch 1, dadurch gekennzeichnet, dass das Abwasser über eine lose Schüttung 10–30 cm³ grosser, und/oder eine Porengrösse von 0,3–0,6 mm und/oder eine spezifische Porenoberfläche von 2–4 m³/l aufweisender Haftkörper geleitet wird.

3. Verfahren nach Anspruch 1 oder 2, dadurch gekennzeichnet, dass die Haftkörperschüttung mit einer Umfangsgeschwindigkeit der äusseren Haftkörper von 0,4–1 m/min. gedreht wird.

4. Verfahren nach einem der Ansprüche 1 bis 3, dadurch gekennzeichnet, dass das Abwasser durch ein gedrehtes geschlossenmanteliges, mit bis zu 90% mit den stückigen Haftkörpern erfülltes Drehrohr, dieses zu 50 bis 80%, insbesondere 50 bis 60%, erfüllend geleitet wird.

5. Verfahren nach einem der Ansprüche 1 bis 3, dadurch gekennzeichnet, dass das Abwasser durch wenigstens ein in der Luft oder Sauerstoffatmosphäre stehendes trogförmiges Becken geleitet wird, in dem ein etwa zur Hälfte eintauchendes mit bis zu 90% mit den stückigen Haftkörpern erfülltes Sieb-Drehrohr gedreht wird.

6. Verfahren nach einem der Ansprüche 1 bis 5, dadurch gekennzeichnet, dass dem Abwasser zur Phosphateliminierung vor dem Überleiten über die lose Schüttung stückiger Haftkörper gelöste Orthophosphate in unlösliche Verbindungen überführende Aluminium- oder Eisensalze zudosiert werden.

7. Vorrichtung zur Durchführung des Verfahrens nach Anspruch 4 mit einem mit Haftkörpern für Biomasse in Form von offenporigen, flexiblen Schwamm- oder Schaumstoffkörpern weitgehend erfüllten Belüftungsbehälter, insbesondere Druckbehälter, mit einem Einlass für vorgereinigtes Abwasser und einem Einlass für Druckluft sowie einem vom Abwassereinlass entfernt angeordneten Ablass für gereinigtes Wasser, dadurch gekennzeichnet, dass der Belüftungsbehälter als geschlossenmanteliges Drehrohr (1) ausgebildet ist, das mit einer Schüttung stückiger Haftkörper bis zu 90% erfüllt ist.

8. Vorrichtung zur Durchführung des Verfahrens nach Anspruch 5 mit einem Haftkörper für Biomasse in Form von offenporigen, flexiblen Schwamm- oder Schaumstoffkörper aufweisenden Belüftungsbehälter, insbesondere Druckbehälter, mit einem Einlass für vorgereinigtes Abwasser und einem Einlass für Druckluft sowie einem vom Abwassereinlass entfernt angeordneten Ablass für gereinigtes Abwasser, dadurch gekennzeichnet, dass der Belüftungsbehälter als trogförmiges Becken (37) ausgebildet ist, in dem ein etwa bis zur Hälfte in das Abwasser eintauchendes Sieb-Drehrohr (30) drehbar ist, das mit einer Schüttung stückiger Haftkörper bis zu 90% erfüllt ist.

9. Vorrichtung nach Anspruch 7 oder 8, dadurch gekennzeichnet, dass das Drehrohr (1, 30) durch Sieb-Trennwände (8, 31) in mehrere Kammern (9) quer unterteilt ist.

10. Vorrichtung nach Anspruch 8 oder 9, dadurch gekennzeichnet, dass im Becken (37) mehrere Sieb-Drehrohre (30) parallel zueinander vorgesehen sind, die durch achsparallele Trennwände (40) voneinander abgeschirmt sind.

11. Vorrichtung nach einem der Ansprüche 8 bis 10, dadurch gekennzeichnet, dass das Becken (37) durch die Sieb-Drehrohre (30) etwa konzentrisch mit Abstand umgebende Längswände (39) unterteilt ist.

## Claims

1. A method for biological total purification by the sludge activation method in which wastewater, which has been preliminarlily purified in the coarse rake, fine rake and any sand trap, and air, in particular compressed air, or commercial oxygen, are brought into contact and interaction with activated sludge (bio matter) for purification, including oxidation, nitrification and any denitrification, said activated sludge being formed on adhesion bodies, in the form of open-pore, flexible, sponge or foam-plastic bodies, which are alternately compressed and expanded again, characterized in that the wastewater is routed in a single stage over a freely movable bulk of lumpy adhesion bodies 10-100 cm³ in size, having a density of 15-30 kg/m³ and a pore size of 0.3-3 mm, or a specific pore surface area of 0.5-6 m²/l, until nitrification and any denitrification, said adhesion bodies being circulated in a rotary container rotating at a peripheral velocity of 0.05-2 m/min. and thereby being raised above the water surface into the air or oxygen atmosphere.

2. The method according to claim 1, characterized in that the wastewater is routed over a freely movable bulk of adhesion bodies 10-30 cm³ in size and/or having a pore size of 0.3-0.6 mm and/or a specific pore surface area of 2-4 m²/l.

3. The method according to claims 1 or 2, characterized in that the freely movable bulk of adhesion bodies is rotated at a peripheral velocity of 0.4-1 m/min. in the case of outer adhesion bodies.

4. The method according to one of the claims 1 to 3, characterized in that the wastewater is routed through a rotated, closed-shell rotary drum up to 90% filled up with said lumpy adhesion bodies, filling up said drum to 50 to 80%, in particular from 50 to 60%.

5. The method according to one of the claims 1 to 3, characterized in that the wastewater is routed through at least one trough-shaped basin located in the air or oxygen atmosphere, an approximately half-immersed sieve-type rotary drum up to 90% filled up with said lumpy adhesion bodies being rotated in said basin.

6. The method according to one of the claims 1 to 5, characterized in that aluminium or iron salts which convert dissolved orthophosphates into insoluble compounds are metered to the wastewater to eliminate phosphates prior to it being routed over the freely movable bulk of lumpy adhesion bodies.

7. An apparatus for carrying out the method according to claim 4, comprising an aeration container largely filled up with adhesion bodies for bio matter in the form of open-pore, flexible, sponge or foam-plastic bodies, in particular a pressure container having an inlet for preliminarily purified wastewater and an inlet for compressed air, as well as an outlet for purified wastewater disposed remote from the wastewater inlet, characterized in that the aeration container is devised as a closed-shell rotary drum (1) up to 90% filled up with a freely movable bulk of lumpy adhesion bodies.

8. The apparatus for carrying out the method according to claim 5, comprising an aeration container having adhesion bodies for bio matter in the form of open-pore, flexible, sponge or foam-plastic bodies, in particular a pressure container having an inlet for preliminarily purified wastewater and an inlet for compressed air, as well as an outlet for purified wastewater disposed remote from the wastewater inlet, characterized in that the aeration container is devised as a trough-shaped basin (37) in which a sieve-type rotary drum (30) approximately half-immersed in the wastewater can be rotated, said rotary drum being up to 90% filled up with a freely movable bulk of lumpy adhesion bodies.

9. The apparatus according to claim 7 or 8, characterized in that the rotary drum (1, 30) is transversely subdivided by sieve-type partition walls (8, 31) into a plurality of compartments (9).

10. The apparatus according to claim 8 or 9, characterized in that in the basin (37) a plurality of sieve-type rotary drums (30) parallel to one another is provided which are screened off from one another by parallel-axis baffles (40).

11. The apparatus according to one of the claims 8 to 10, characterized in that the basin (37) is subdivided by longitudinal walls (39) roughly concentrically around the sieve-type rotary drums (30) with a spacing.

## Revendications

1. Procédé pour l'épuration biologique complète suivant le procédé des boues activées, dans lequel l'eau usée, épurée préalablement par des grilles grossières, des grilles fines etéventuellement un lit de sable, et de l'air, en particulier de l'air comprimé ou de l'oxygène technique, sont mis en contact et soumis à un processus d'échange avec une boue activée (biomasse), en vue de l'épuration de l'eau usée, en y comprenant l'oxydation, la nitrification et éventuellement la dénitrification, cette biomasse étant formée sur des supports d'adhérence se présentant sous forme de corps spongieux ou de matière cellulaire, flexibles, à pores ouverts, qui sont alternativement comprimés et à nouveau détendus, caractérisé en ce qu'on conduit l'eau usée en une étape sur une accumulation meuble de supports d'adhérence en morceaux, d'un volume de 10 à 100 cm³, d'une masse volumique de 15 à 30 kg/m³ en combinaison avec une dimension de pores de 0,3 à 3 mm ou une surface de pores spécifique de 0,5 à 6 m²/l, jusqu'à la nitrification et éventuellement la dénitrification, ces supports d'adhérence étant soumis à des retournements dans un réservoir rotatif tournant à une vitesse périphérique de 0,05 à 2 m/mn, et étant ainsi élevés jusqu'au-dessus de la surface de l'eau dans l'atmosphère d'air ou d'oxygène.

2. Procédé suivant la revendication 1, caractérisé en ce qu'on amène l'eau usée sur une accumulation meuble de supports d'adhérence d'un volume de 10 à 30 cm³ et/ou avec une dimension de pores de 0,3 à 0,6 mm et/ou une surface spécifique de pores de 2 à 4 m²/l.

3. Procédé suivant l'une quelconque des revendications 1 et 2, caractérisé en ce qu'on fait tourner l'accumulation de supports d'adhérence avec une vitesse périphérique des supports d'adhérence extérieurs de 0,4 à 1 m/mn.

4. Procédé suivant l'une quelconque des revendications 1 à 3, caractérisé en ce qu'on amène l'eau usée à travers un tube tournant à enveloppe fermée, rempli jusqu'à 90 pourcent de supports d'adhérence en morceaux, l'eau remplissant ce tube jusqu'à 50 à 80 pourcent, en particulier jusqu'à 50 à 60 pourcent.

5. Procédé suivant l'une quelconque des revendications 1 à 3, caractérisé en ce qu'on amène l'eau usée à travers au moins un bassin en forme d'auge, placé dans une atmosphère d'air ou d'oxygène, dans lequel on fait tourner un tube tournant formant tamis, rempli jusqu'à 90 pourcent de supports d'adhérence en morceaux et immergé à peu près jusqu'à moitié.

6. Procédé suivant l'une quelconque des revendications 1 à 5, caractérisé en ce que l'on ajoute à l'eau usée, pour l'élimination des phosphates, avant de la conduire sur l'accumulation meuble de supports d'adhérence en morceaux, une quantité dosée de sels d'aluminium ou de fer transformant les orthophosphates dissous en composés insolubles.

7. Dispositif pour la mise en œuvre du procédé suivant la revendication 4, avec un réservoir d'aération, en particulier un réservoir sous pression, largement rempli de supports d'adhérence pour la biomasse, sous forme de corps spongieux ou de matière cellulaire, flexibles, à pores ouverts, avec une entrée pour l'eau préépurée et une entrée pour de l'air comprimé, ainsi qu'avec une sortie, éloignée de l'entrée d'eau usée, pour l'eau épurée, caractérisé en ce que le réservoir d'aération est constitué d'un tube tournant (1) à enveloppe fermée, qui est rempli jusqu'à 90 pourcent d'une accumulation de supports d'adhérence en morceaux.

8. Dispositif pour la mise en œuvre du procédé suivant la revendication 5, avec un réservoir d'aération, en particulier un réservoir sous pression, largement rempli de supports d'adhérence pour la biomasse, sous forme de corps spongieux ou de matière cellulaire, flexibles, à pores ouverts, avec une entrée pour l'eau préépurée et une entrée pour de l'air comprimé, ainsi qu'avec une sortie, éloignée de l'entrée d'eau usée, pour l'eau épurée, caractérisé en ce que le réservoir d'aération est constitué par un bassin en forme d'auge (37), dans lequel peut tourner un tube tournant (30) constituant tamis, rempli jusqu'à 90 pourcent d'une accumulation de supports d'adhérence en morceaux et immergé à peu près jusqu'à moitié dans l'eau usée.

9. Dispositif suivant l'une quelconque des revendications 7 et 8, caractérisé en ce que le tube tournant (1, 30) est divisé transversalement en plusieurs chambres (9) par des cloisons formant tamis (8, 31).

10. Dispositif suivant l'une quelconque des revendications 8 et 9, caractérisé en ce que, dans le bassin (37), sont prévus plusieurs tubes tournants (30) formant tamis, parallèles les uns aux autres, qui sont séparés les uns des autres par des cloisons (40) parallèles à leurs axes.

11. Dispositif suivant l'une quelconque des revendications 8 à 10, caractérisé en ce que le bassin (37) est divisé par des parois longitudinales (39) entourant les tubes tournants (30) formant tamis à peu près concentriquement et à distance de ceux-ci.

FIG. 1

FIG. 2

0 008 810

FIG. 3

FIG. 4